# EUROPEAN PATENT APPLICATION

(11) **EP 4 647 348 A1**
(43) Date of publication of application: **12.11.2025**
(21) Application number: 24914484.1
(22) Date of filing: 06.06.2024
(51) Int. Cl.: B64U 40/10, B64U 10/14, B64U 30/12, B64U 50/19

(54) **FLYING OBJECT, METHOD FOR CONTROLLING FLYING OBJECT, AND PROGRAM**

(30) Priority: 18.03.2024 JP 2024042346
(71) Applicant: Aeronext Inc., Shibuya-ku Tokyo 1500021 (JP)
(72) Inventor: OKOCHI, Masaki, Tokyo 150-0021 (JP)
(74) Representative: Hasegawa, Kan
(86) International application number: PCT/JP2024/020758
(87) International publication number: WO 2025/197128

(57) **Abstract**

To provide, as one embodiment of the present invention, a flight vehicle that can be controlled to both increase a cruising range of the flight vehicle and stabilize the flight vehicle during hovering and landing by providing a rotatable auxiliary wing on the flight vehicle and controlling an angle of attack thereof, and a method and a computer program for controlling the flight vehicle.

[Solution]

A flight vehicle or the like is provided that includes a body, a plurality of rotor blade units provided on the body, an auxiliary wing unit provided on the body, and a control unit that controls operation of the rotor blade units and the auxiliary wing unit, the control unit performing change control of a lift of the auxiliary wing unit according to a result of comparison between an acquired thrust-related parameter and one or more reference parameters.

## Description

### Field

The present disclosure relates to a flight vehicle and a method and a computer program for controlling the flight vehicle.

### Background

Various services using flight vehicles such as drones and unmanned aerial vehicles (UAVs) (hereinafter collectively referred to as "flight vehicles") have been developed in recent years. In particular, the flight vehicles generally referred to as multicopters (hereinafter collectively referred to as "multicopters") that are provided with a plurality of fixed-pitch propellers and move by tilting their airframes have a simpler structure and are easier to be manufactured and maintained than existing single-rotor helicopters and the like that are provided with variable pitch mechanisms. Therefore, the multicopters are being considered and implemented to be used in various industries. The flying vehicles provided with a plurality of propellers need to be controlled differently from the single-rotor helicopters.

However, multicopter-shaped airframes may be less fuel-efficient (electricity-efficient) than vertical takeoff and landing (VTOL) aircraft and the like that fly using a lift generated by main wings. If shapes of the body and other parts are not optimized for an attitude of the flight vehicle while cruising, the drag of the body increases, making it difficult to make improvement in duration and distance of cruising. In view of such situations, Patent Document 1 discloses a flight vehicle that reduces loads on rotor blades. Refer to Patent Document 1, for example.

### Citation List

### Patent Literature

[Patent Document 1] United States Patent Application Publication No. 2020/0001995

### Summary

### Technical Problem

In Patent Document 1, in order to improve an available flight time, an airframe (hereinafter collectively referred to as "conventional airframe") is disclosed that forms a positive angle of attack when a rotorcraft of this invention moves forward by setting the angle between the axis of rotation of the rotor blades and a line normal to a reference plane of the body to an angle between 5 degrees to 30 degrees, and thus reduces the loads on the rotor blades using the lift generated by the body.

The conventional airframe is designed such that the angle of attack of the body is at a suitable angle for generating the lift when the flight vehicle cruises. While propellers having a fixed pitch have a simple structure, they cannot generate a negative lift by changing a pitch in the same way as variable pitch propellers. For example, when the flight vehicle is moving forward, if the body generates a lift exceeding a predetermined magnitude, control is performed to adjust the altitude by reducing the rotational speed of the propeller so as not to make the altitude too high.

If the rotational speed of a motor is greatly reduced and falls below a rotational speed required to maintain the attitude of the flight vehicle, a concern of instability in attitude occurs. Furthermore, if the rotational speed becomes too low for attitude control, the flight vehicle may end up crashing.

Even if the multicopter does not have an airfoil-shaped body such as that of Patent Document 1, the body and the main wings may generate the lift, so that the same phenomenon can occur.

Therefore, the present invention provides a flight vehicle and the like that can prevent the decrease in the rotational speed of the propeller during descending including landing and stabilize the flight of the flight vehicle by providing a rotatable auxiliary wing on the body of the rotorcraft and changing a rotational angle of the auxiliary wing according to a state of the flight vehicle.

In view of the situations described above, it is an object of the present invention to provide a flight vehicle that can stably control the attitude of the flight vehicle that flies using a plurality of fixed-pitch propellers during a forward movement and a downward movement.

Therefore, the present invention provides the rotatable auxiliary wing on the body of the rotorcraft to control the angle of attack, thereby reducing power consumption using the lift generated by an auxiliary wing unit during flight. During landing, the rotation of the auxiliary wing unit is controlled to generate the negative lift to prevent the rotational speed of the propeller from decreasing. Thus, a flight vehicle and a method and a computer program for controlling the flight vehicle are provided that enable control to both increase the cruising range of the flight vehicle and stabilize the flight vehicle during hovering and landing.

### Solution to Problem

According to the present disclosure, as one embodiment of the present invention, a flight vehicle or the like is provided that includes a body, a plurality of rotor blade units provided on the body, an auxiliary wing unit provided on the body, and a control unit configured to control operation of the rotor blade units and the auxiliary wing unit, in which the control unit performs change control of a lift of the auxiliary wing unit according to a result of comparison between an acquired thrust-related parameter and one or more reference parameters.

Other problems disclosed in the present application and solutions thereof will be clarified in the description of embodiments and the drawings.

### Advantageous Effects of Invention

The present disclosure can provide a multicopter capable of being stably controlled and a method for controlling the multicopter.

### Brief Description of Drawings

FIG. 1 is a conceptual view of a flight vehicle including an auxiliary wing unit according to the present disclosure as viewed from a side.
FIG. 2 is a side view of the flight vehicle of FIG. 1 during cruising.
FIG. 3 is a side view of the flight vehicle of FIG. 1 when the auxiliary wing unit has operated.
FIG. 4 is a plan view of the flight vehicle of FIG. 1.
FIG. 5 is a functional block diagram of the flight vehicle of FIG. 1.
FIG. 6 is a side view of another flight vehicle according to the present disclosure.
FIG. 7 is a plan view of the flight vehicle of FIG. 5.
FIG. 8 is a plan view of the other flight vehicle according to the present disclosure.
FIG. 9 is a side view of the flight vehicle of FIG. 8.
FIG. 10 is a conceptual view of an example of an auxiliary wing mounting position of the flight vehicle according to the present disclosure.
FIG. 11 is a conceptual view of another example of the auxiliary wing mounting position of the flight vehicle according to the present disclosure.
FIG. 12 is a conceptual view of still another example of the auxiliary wing mounting position of the flight vehicle according to the present disclosure.
FIG. 13 is a conceptual view of still another example of the auxiliary wing mounting position of the flight vehicle according to the present disclosure.
FIG. 14 is a conceptual view of still another example of the auxiliary wing mounting position of the flight vehicle according to the present disclosure.
FIG. 15 is graph A illustrating a relation between a degree of throttle opening and thrust.
FIG. 16 is a side view illustrating an example of the auxiliary wing unit of FIG. 9 when being operated during cruising.
FIG. 17 is a side view illustrating another example of the auxiliary wing unit of FIG. 9 when being operated during cruising.
FIG. 18 is a side view illustrating another example of the auxiliary wing unit of FIG. 9 when being operated during cruising.
FIG. 19 is a plan view of the other flight vehicle according to the present disclosure.
FIG. 20 is a side view of the flight vehicle including the auxiliary wing unit of another embodiment according to the present disclosure.
FIG. 21 is a plan view of the flight vehicle of FIG. 20.
FIG. 22 is a side view of the flight vehicle including the auxiliary wing unit of another embodiment according to the present disclosure.
FIG. 23 is a plan view of the flight vehicle of FIG. 22.

### Description of Embodiments

The following lists and describes contents of an embodiment of the present invention. A flight vehicle according to the embodiment of the present invention has the following configuration.

### [Item 1]

A flight vehicle including:
a body;
a plurality of rotor blade units provided on the body;
an auxiliary wing unit provided on the body; and
a control unit configured to control operation of the rotor blade units and the auxiliary wing unit, in which
the control unit performs change control of a lift of the auxiliary wing unit according to a result of comparison between an acquired thrust-related parameter and one or more reference parameters.

### [Item 2]

The flight vehicle according to item 1, in which the control unit performs the change control so as to reduce the lift of the auxiliary wing unit when the thrust-related parameter is determined to be below a predetermined reference parameter.

### [Item 3]

The flight vehicle according to item 2, in which the change control is control to tilt forward the auxiliary wing unit from a current state.

### [Item 4]

The flight vehicle according to item 2, in which the change control is control to tilt forward the auxiliary wing unit to a negative angle of attack.

### [Item 5]

The flight vehicle according to item 1, in which the control unit performs the change control so as to increase the lift of the auxiliary wing unit when the thrust-related parameter is determined to be above a predetermined reference parameter.

### [Item 6]

The flight vehicle according to item 5, in which the change control is control to tilt backward the auxiliary wing unit from a current state.

### [Item 7]

The flight vehicle according to item 5, in which the change control is control to tilt backward the auxiliary wing unit to a positive angle of attack.

### [Item 8]

The flight vehicle according to item 2 or 5, in which the change control displaces a resistance member provided on the auxiliary wing unit.

### [Item 9]

The flight vehicle according to any one of items 1 to 8, in which
the reference parameter includes two or more parameters, and
the control unit performs the change control stepwise according to results of comparison between the thrust-related parameter and the two or more parameters.

### [Item 10]

The flight vehicle according to any one of items 1 to 9, in which
the reference parameter includes a reference parameter for increase and a reference parameter for decrease, and
the control unit performs the change control using the reference parameter for increase in the comparison process when the thrust-related parameter increases and using the reference parameter for decrease in the comparison process when the thrust-related parameter decreases.

### [Item 11]

The flight vehicle according to any one of items 1 to 10, in which the control unit performs, during landing, a process to compare stop condition information indicating conditions on the thrust-related parameter for stopping the change control of the auxiliary wing unit with the acquired thrust-related parameter, and stops the change control of the auxiliary wing unit for a predetermined period according to result information on the comparison process.

### [Item 12]

The flight vehicle according to any one of items 1 to 11, in which the control unit stops the change control of the auxiliary wing unit for a predetermined period in response to a determination that landing instruction information has been acquired.

### [Item 13]

The flight vehicle according to any one of items 1 to 12, in which the control unit performs, during landing, a process to compare stop condition information indicating conditions on a waypoint for stopping the change control of the auxiliary wing unit with acquired current waypoint information, and stops the change control of the auxiliary wing unit for a predetermined period according to result information on the comparison process.

### [Item 14]

The flight vehicle according to any one of items 1 to 13, in which the control unit performs, during landing, a process to compare stop condition information indicating conditions on position information for stopping the change control of the auxiliary wing unit with acquired current position information, and stops the change control of the auxiliary wing unit for a predetermined period according to result information on the comparison process.

### [Item 15]

The flight vehicle according to any one of items 1 to 14, in which the control unit performs, during takeoff, a process to compare start condition information indicating conditions on the thrust-related parameter for stopping the change control of the auxiliary wing unit with the acquired thrust-related parameter, and stops the change control of the auxiliary wing unit for a predetermined period according to result information on the comparison process.

### [Item 16]

The flight vehicle according to any one of items 1 to 15, in which the control unit stops the change control of the auxiliary wing unit for a predetermined period in response to a determination that takeoff instruction information has been acquired.

### [Item 17]

The flight vehicle according to any one of items 1 to 16, in which the control unit performs, during takeoff, a process to compare stop condition information indicating conditions on a waypoint for stopping the change control of the auxiliary wing unit with acquired current waypoint information, and stops the change control of the auxiliary wing unit for a predetermined period according to result information on the comparison process.

### [Item 18]

The flight vehicle according to any one of items 1 to 17, in which the control unit performs, during takeoff, a process to compare stop condition information indicating conditions on position information for stopping the change control of the auxiliary wing unit with acquired current position information, and stops the change control of the auxiliary wing unit for a predetermined period according to result information on the comparison process.

### [Item 19]

The flight vehicle according to any one of items 1 to 18, in which the control unit performs a process to compare change control record information including control timing when the change control was performed with reference control timing information, and stops the change control of the auxiliary wing unit for a predetermined period according to result information on the comparison process.

### [Item 20]

The flight vehicle any one of items 1 to 19, in which the thrust-related parameter is thrust control information on the rotor blade units.

### [Item 21]

The flight vehicle according to item 20, in which the thrust-related parameter is pulse width modulation (PWM) control information on the rotor blade units.

### [Item 22]

The flight vehicle according to item 20, in which the thrust-related parameter is rotational speed information on the rotor blade units.

### [Item 23]

The flight vehicle according to item 20, in which the thrust-related parameter is power supply information to the rotor blade units.

### [Item 24]

The flight vehicle according to any one of items 1 to 19, in which the thrust-related parameter is velocity information.

### [Item 25]

The flight vehicle according to item 24, in which the thrust-related parameter is airspeed information.

### [Item 26]

The flight vehicle according to item 24, in which the thrust-related parameter is ground speed information.

### [Item 27]

The flight vehicle according to any one of items 1 to 19, in which the thrust-related parameter is altitude information.

### [Item 28]

The flight vehicle according to any one of items 1 to 27, in which the auxiliary wing unit is provided on each of left and right sides of the body.

### [Item 29]

The flight vehicle according to item 28, in which the control unit commonly performs the change control of the auxiliary wing units provided on the left and right sides of the body.

### [Item 30]

The flight vehicle according to item 28, in which the auxiliary wing units are provided on more central sides than the rotor blade units.

### [Item 31]

The flight vehicle according to item 28, in which the auxiliary wing units are provided more outside than the rotor blade units.

### [Item 32]

The flight vehicle according to item 28, in which
the auxiliary wing units have through-holes, and
at least portions of the rotor blade units are provided in the through-holes.

### [Item 33]

The flight vehicle according to any one of items 1 to 32, in which the rotor blade units are provided in four directions of front, rear, left, and right directions with respect to the body.

### [Item 34]

The flight vehicle according to any one of items 1 to 32, in which the rotor blade units are provided in four directions of at least a front left direction and a front right direction, and a rear left direction and a rear right direction with respect to the body.

### [Item 35]

The flight vehicle according to any one of items 1 to 34, further including a loading portion configured to be loaded with a load.

### [Item 36]

The flight vehicle according to item 35, in which the loading portion is provided in the body.

### [Item 37]

The flight vehicle according to item 35, in which the loading portion is configured to be loaded with the load from above the loading portion and release the load from below the loading portion.

### [Item 38]

The flight vehicle according to item 35, in which the loading portion is configured to be loaded with the load from below the loading portion and release the load from below the loading portion.

### [Item 39]

The flight vehicle according to item 35, in which the loading portion is configured to be loaded with the load from a lateral side of the loading portion and release the load from below the loading portion.

### [Item 40]

A method for controlling a flight vehicle that includes:
a body;
a plurality of rotor blade units provided on the body;
an auxiliary wing unit provided on the body; and
a control unit configured to control operation of the rotor blade units and the auxiliary wing unit,
the method including causing the control unit to perform change control of a lift of the auxiliary wing unit according to a result of comparison between an acquired thrust-related parameter and a reference parameter.

### [Item 41]

A computer program for controlling a flight vehicle that includes:
a body;
a plurality of rotor blade units provided on the body;
an auxiliary wing unit provided on the body; and
a control unit configured to control operation of the rotor blade units and the auxiliary wing unit,
the computer program causing the control unit to perform change control of a lift of the auxiliary wing unit according to a result of comparison between an acquired thrust-related parameter and a reference parameter.

### <Details of Embodiments According to Present Invention>

The following describes a flight vehicle and a method for controlling the flight vehicle according to an embodiment of the present disclosure with reference to the drawings. The term "detach" as used herein refers, for example, to a state in which a load is released from being held by the flight vehicle or a loading portion included in the flight vehicle, and becomes mechanically separable from the flight vehicle or the loading portion, and the load is not locked when being placed on the ground or moved in a take-out direction.

### <Details of First Embodiment>

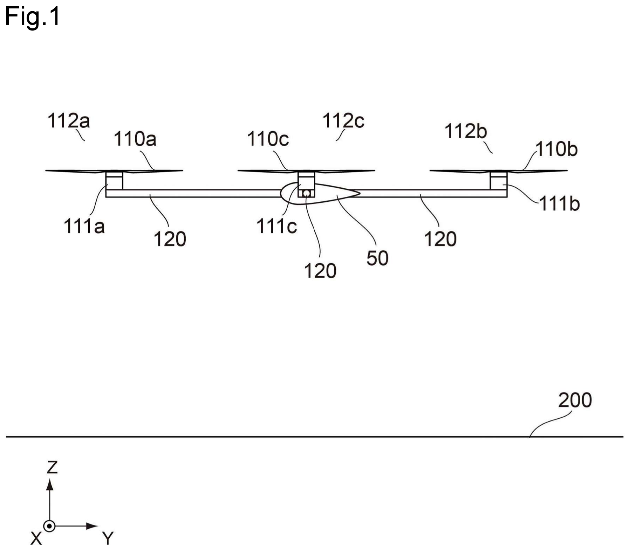

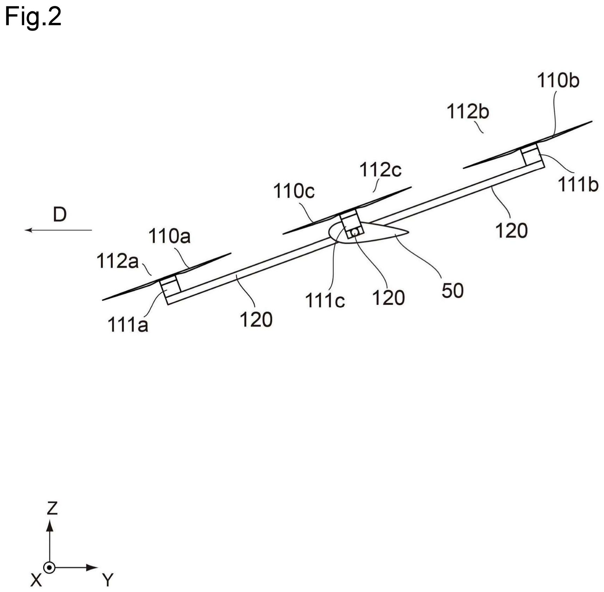

As illustrated in FIGS. 1 and 2, a flight vehicle 100 according to the present embodiment is a rotorcraft capable of vertical takeoff and landing and horizontal movement.

The flight vehicle 100 takes off from a takeoff point and flies to a destination. For example, when the flight vehicle 100 makes a delivery, the flight vehicle 100 that has reached the destination completes the delivery by landing at a port or the like, or hovering over the port or the like, and detaching the load on board (such as a package and working devices (including a camera and sensors)). After detaching the package, the flight vehicle 100 moves by flight to other destinations, such as the original takeoff point or other delivery points.

As illustrated in FIGS. 1 to 4, the flight vehicle 100 according to the present embodiment includes one or a plurality of rotor blade units 122 and a body 150.

Each of the rotor blade units 112 (112a, 112b, 112c, 112d) according to the present embodiment includes a propeller 110 and a motor 111. The rotor blade unit 112 can be provided on a frame 120. For example, the rotor blade unit 112 is provided at the front end, intermediate portions, the rear end, and the like of the frame 120. The frame 120 and the rotor blade units 112 may be connected directly or with intermediate members such as motor mounts interposed therebetween.

The flight vehicle 100 is preferably provided with an energy source (such as a secondary battery, a fuel cell, fossil fuel) for powering the rotor blade units 112. For example, the flight vehicle 100 may be provided with a battery on the body 150, as will be described later.

The flight vehicle 100 illustrated in the drawings is depicted in a simplified form to facilitate the explanation of the structure of the present disclosure, and the detailed configuration of a control unit and the like, for example, is not illustrated.

The forward direction of the flight vehicle 100 is the direction of arrow D (-Y direction) in the drawings (details will be described later).

In the following descriptions, terms may be distinguished according to the following definitions. Front-rear directions: +Y and -Y directions; upper-lower directions (or vertical directions): +Z and -Z directions; left-right directions (or horizontal directions): +X and -X directions; a traveling direction (forward): -Y direction; a reverse direction (backward): +Y direction; an ascending direction (upward): +Z direction; and a descending direction (downward): -Z direction.

The propeller 110 receives an output from the motor 111 to rotate. The rotation of the propeller 110 generates a propulsive force to fly the flight vehicle 100. The propeller 110 can rotate clockwise, stop, and rotate counterclockwise.

The propeller 110 included in the flight vehicle of the present disclosure has one or more blades. Any number of blades (of a rotor) (for example, one, two, three, four, or more blades) may be included. The shape of the blades can be any shape, such as a flat shape, a curved shape, a twisted shape, a tapered shape, or a combination thereof. The shape of each of the blades can be changed (for example, expanded, contracted, folded, and bent). The blade may be symmetrical (having identical upper and lower surfaces) or asymmetrical (having differently shaped upper and lower surfaces). The blades can be formed into aerofoils, wings, or any geometric shape suitable for generating aerodynamic forces (such as lift and thrust) when the blades are moved through the air. The geometric shape of the blades can be selected as appropriate to optimize the aerodynamic characteristics of the blades, such as increasing the lift and thrust and reducing the drag.

The propeller included in the flight vehicle of the present disclosure may be, but is not limited to, a fixed pitch propeller, a variable pitch propeller, or a mixture of the fixed and variable pitch propellers. For example, when the power source is an engine, the variable pitch propeller is preferably used because the rotation control speed of the propeller may be lower than that when an electric motor is used.

The motor 111 produces the rotation of the propeller 110. For example, a drive unit can include the electric motor, the engine, or the like. The blades can be driven by the motor and rotates about the rotation axis of the motor (for example, the long axis of the motor).

The blades can all rotate in the same direction or rotate independently. For example, some of the blades may rotate in one direction, and the other blades may rotate in the other direction. The blades can all rotate at the same rotational speed, or can rotate at rotational speeds different from one another. The rotational speed can be determined automatically or manually based on dimensions (such as the size and weight) of the moving object and control conditions (speed, moving direction, and so on).

The flight vehicle 100 determines the rotational speed of each of the motors and the angle of flight via a flight controller according to the speed and direction of wind, using inputs from a proportional control system or the like (not illustrated) or using a computer program. As a result, the flight vehicle can perform movements such as ascending and descending, accelerating and decelerating, and changing directions.

The flight vehicle 100 can also perform autonomous flight according to a route and rules set in advance or during the flight, or flight by being maneuvered using the proportional control system.

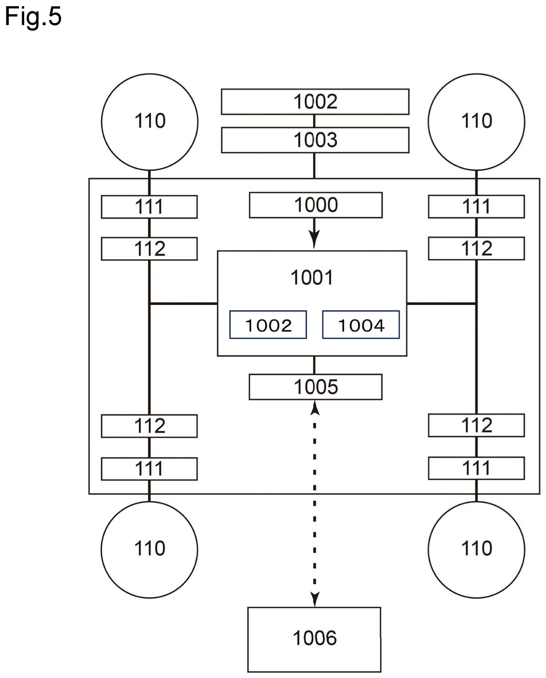

The flight vehicle 100 described above includes one, some, or all of the functional blocks illustrated in FIG. 5. The functional blocks in FIG. 5 are an example of the minimum reference configuration. A flight controller 1001 is what is called a processing unit. The processing unit can include one or more processors such as a programmable processor or programmable processors (for example, a central processing unit (CPU) or CPUs). The processing unit includes a memory 1004, and the memory 1004 is accessible. The memory 1004 stores therein logics, codes, and/or program instructions that can be executed by the processing unit to perform processing at one or more steps. The memory 1004 may include, for example, separable media such as a Secure Digital (SD) card and a random access memory (RAM), or an external storage device. Data acquired from sensors and the like 1002 may be directly transmitted to and stored in the memory 1004. For example, still and moving image data captured by a camera or the like is recorded in a built-in or external memory.

The processing unit includes a control module configured to control the state of the rotorcraft. For example, the control module controls a thrust mechanism (such as a motor) of the rotorcraft to adjust the spatial arrangement, velocity, and/or acceleration of the rotorcraft having six degrees of freedom (translational movements x, y, and z, and rotational movements θₓ, θ_{y}, and θ_{z}). The control module can control one or more of the states of the loading portion and the sensors.

The processing unit can communicate with a transceiver 1005 configured to transmit and/or receive data from one or more external devices (for example, terminal devices, display devices, or other remote controllers). A transceiver 1006 can use any suitable way of communication, such as wired communication or wireless communication. For example, the transceiver 1005 can use one or more of a local area network (LAN), a wide area network (WAN), infrared, wireless, Wi-Fi, a point-to-point (P2P) network, an electric communication network, cloud communications, and so forth. The transceiver 1005 can transmit and/or receive one or more of the data acquired by the sensors and the like 1002, processing results generated by the processing unit, predetermined control data, and user commands from the terminal devices or the remote controllers.

The sensors and the like 1002 according to the present embodiment can include inertial sensors (acceleration sensor and gyrosensor), a Global Positioning System (GPS) sensor, a proximity sensor (for example, LiDAR), or a vision/image sensor (for example, camera).

Since the plane of rotation of the propeller 110 included in the flight vehicle 100 of the present disclosure is a horizontal rotor blades that is substantially horizontal during hovering under no wind conditions, the flight vehicle 100 can be lifted by the rotation of the propeller. Since the plane of rotation of the propeller 110 is tilted forward toward the traveling direction during traveling, the plane of rotation of the propeller 110 tilted forward produces the upward lift and the thrust in the traveling direction, and thereby, the flight vehicle 100 travels.

In vertical takeoff and landing of the flight vehicle 100, the lift generated by the rotor blade units 112 can lift the flight vehicle 100.

In a flight unit that includes the motor 111, the propeller 110, the frame 120, and so forth, and generates the lift and the thrust, the flight vehicle 100 may include the body 150 that can contain a processing unit, a battery 1000, and so forth mounted on the flight unit. The body 150 can efficiently shorten the time of flight by optimizing the shape of the flight vehicle 100 in an attitude during cruising expected to be maintained for a long time during the movement of the flight vehicle 100, and thus increasing the flight velocity.

When the body 150 contains the processing unit, the battery, the load, and so forth, the body 150 preferably has an outer skin that is strong enough to withstand the flight and the takeoff and landing. For example, plastics, fiber-reinforced plastics (FRPs), and the like are suitable as materials of the outer skin because of their rigidity and waterproof properties. These materials may be the same or different from those of the frame 120 (including arms) included in the flight unit.

The motor mounts (not illustrated), the frame 120, and the body 150 that are included in the flight unit may be made by connecting the parts thereof together, or may be formed into a single piece using a monocoque structure or integral molding (for example, the motor mounts and the frame 120 may be formed into a single piece, or all of the motor mounts, the frame 120, and the body 150 may be formed into a single piece). By integrating the parts into a single piece, joints between the parts can be made smoother. Thus, effects of a reduction in drag and an improvement in fuel efficiency can be expected due to such a shape of the flight vehicle as to be called a blended wing body or a lifting body.

The shape of the flight vehicle 100 may be directional. Examples of the directional shape include, but are not limited to, a shape that improves the flight efficiency when the nose of the flight vehicle directly faces the wind, such as the shape of a streamlined body that reduces the drag in a cruising attitude of the flight vehicle 100 under no wind conditions or the shape of an airfoil-shaped body.

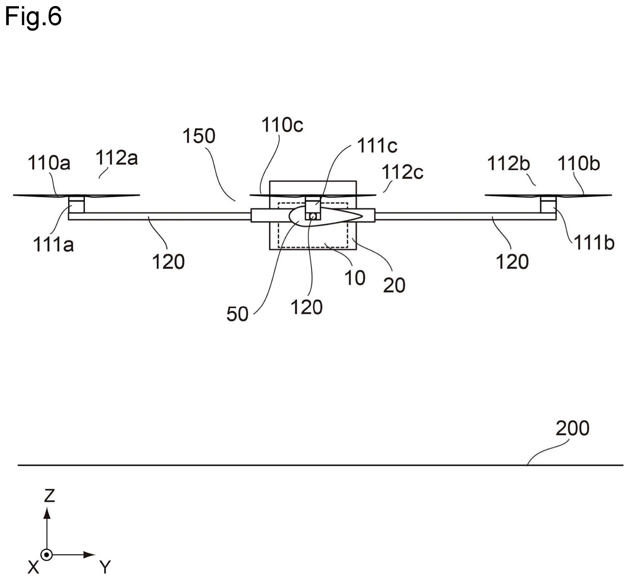

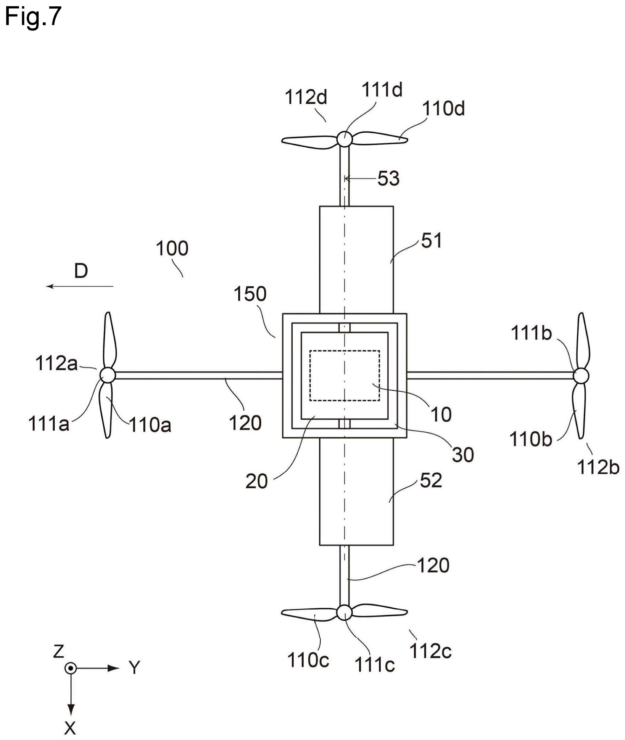

As illustrated in FIGS. 6 and 7, the body 150 may include a loading portion 20 that can fly with a load 10 loaded thereon.

The loading portion 20 may be provided in an enclosed space 30 surrounded by the frame 120, as illustrated in FIG. 7. The loading portion 20 can be fixedly connected, or connected so as to be independently displaceable, to the frame 120 with a load rotating pivot 22, such as a shaft or a gimbal having one or more degrees of freedom, interposed therebetween, as illustrated in FIGS. 5 and 6. This connection makes it possible to keep the load 10 in a predetermined attitude (for example, horizontal) regardless of the attitude of the flight vehicle 100.

As a method for keeping the load 10 in the predetermined attitude, the load rotating pivot 22 may be provided between the frame 120 and the loading portion 20, or the load rotating pivot 22 may be provided between the loading portion 20 and the load 10. That is, the load rotating pivot 2 can be provided at any location between the frame 120 and the load 10 connected to each other. The location of the load rotating pivot 22 is not limited.

The location and direction of the rotating pivot used for displacing of the loading portion 20 or the load 10 is determined, for example, by the attitude of the flight vehicle 100 while flying. If the main propulsive direction is the front-rear direction, the flight unit tilts in the front-rear direction. Therefore, by providing one pivot that allows rotation at least in the pitch direction, the tilt of the flight unit while flying can be canceled and the attitude of the load can be maintained. In addition, rotating pivots having two or more axes of rotation may be provided when accommodating the tilting in other axial directions (roll and yaw).

The loading portion 20 or the load 10 may be displaced by passive control to keep the attitude by the own weight of the object to be kept in attitude, or by active control to control the attitude by a motor, a servo, or the like. When controlling the attitude more accurately, the active control is preferably performed, but additional mechanisms lead to weight increase and so forth. Therefore, the control method may be appropriately determined according to the purpose.

The load 10 may be inserted into the loading portion 11 from the top, side, or bottom of the loading portion 11. The direction of removal of the detached load may also be in any of the three directions mentioned above, but in the case of automatic detachment, the removal is preferably done toward the lower side of the flight vehicle. When the removal is performed via human hands or a robot, the direction of removal may be upward or sideward. As a more specific example, for example, the configuration may be such that the load is inserted from above the loading portion 11 and removed from below by releasing the support by a member for supporting the bottom or a side of the load (for example, in the case where the member supports the bottom, by opening the bottom side by rotating or sliding the support member outward like a door, or, in the case where the member supports the side, by loosening pressure applied by the support member); or the configuration may be such that the load is inserted from above the loading portion 11, and removed from above or a lateral side of the loading portion; or the configuration may be such that the load is inserted from below the loading portion 11, and removed from any one of above, below, and lateral sides of the loading portion; or the configuration may be such that the load is inserted from a lateral side of the loading portion 11, and removed from any one of above, below, and lateral sides of the loading portion. The insertion and removal of the load may be performed automatically by the mechanism of the loading portion 11, or by an external device (such as the robot) as described above, or may be performed manually.

The loading portion 20 is preferably configured with a material having strength to withstand the flight and the takeoff and landing while holding the load 10. For example, resins, FRPs, and the like are suitable as component materials of the loading portion 20 because of their rigidity and light weight. When metal is used as a material of the loading portion 20, aluminum, magnesium, or the like having small specific weight is preferably used. Thus, the weight can be prevented from increasing while increasing the strength. These materials may each be the same material as the frame 120, or may be different materials.

The motor mounts (not illustrated) and the frame 120 included in the flight unit may be made by connecting the parts thereof together, or may be formed into a single piece using a monocoque structure or integral molding. For example, the motor mounts and the frame 120 may be formed into a single piece. Since the joints between the parts can be made smoother by integrating the parts into a single piece, the drag can be reduced and the fuel efficiency can be improved.

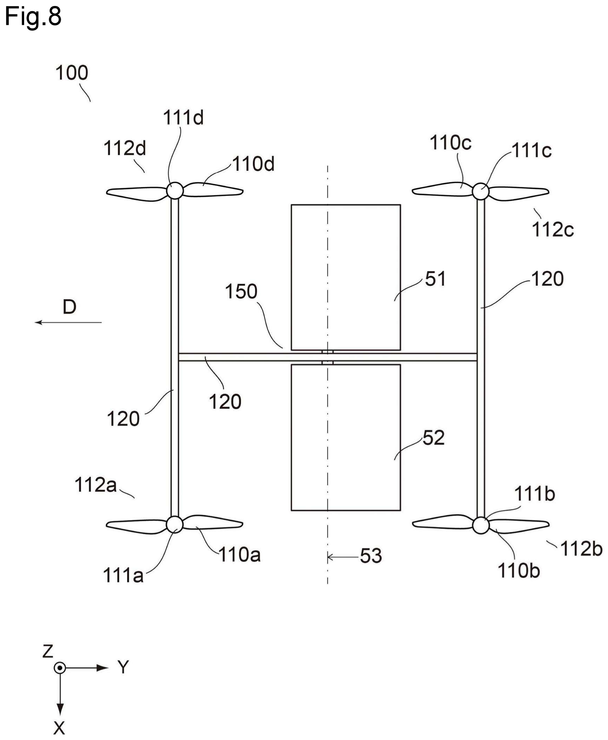

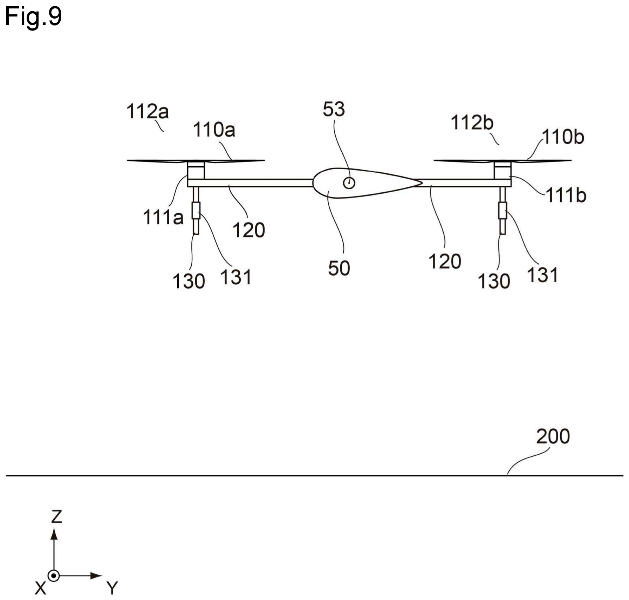

The flight vehicle 100 loaded with the load 10 may land or hover and detach the load 10 after reaching a point over the destination point. In the flight vehicle 100 that lands, landing gear legs 130 included in the flight vehicle 100 preferably prevent the load 10 from receiving impact by directly making contact with a landing surface 200 when the flight vehicle lands. In this case, for example, the landing gear legs 130 are preferably made longer downward (in the -Z direction) than the load 10 at least in side view in the state of landing on a flat surface, as in the airframe illustrated in FIGS. 8 and 9. The landing gear legs 130 may further include a shock absorbing device 131, such as a damper.

The flight vehicle 100 of the present disclosure includes an auxiliary wing unit 50 that can be rotated by a signal from the flight controller 1001, as illustrated in FIGS. 1 to 4. An aerofoil included in the auxiliary wing unit 50 is considered to have a general airfoil shape, such as a symmetric aerofoil shape, an asymmetric aerofoil shape, or an S-shaped camber. Each of the aerofoil shapes has its own characteristics and is preferably selected according to the application. For example, the asymmetric aerofoil can efficiently generate a lift during a forward movement. The asymmetric aerofoil is suitable for a use method in which the aerofoil is rotated to generate both a positive lift and a negative lift. The S-shaped camber can reduce moments generated on the wing.

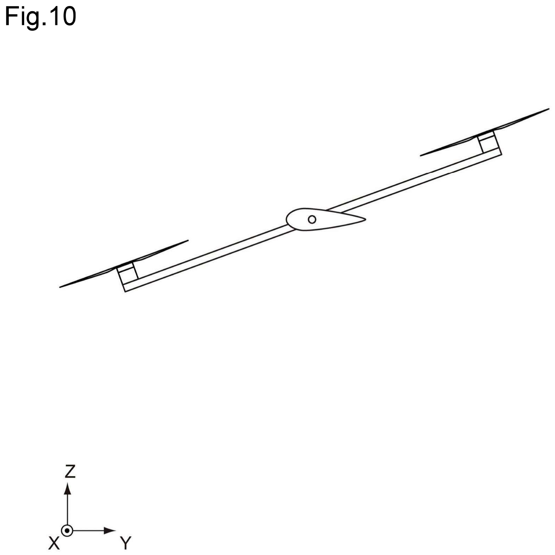

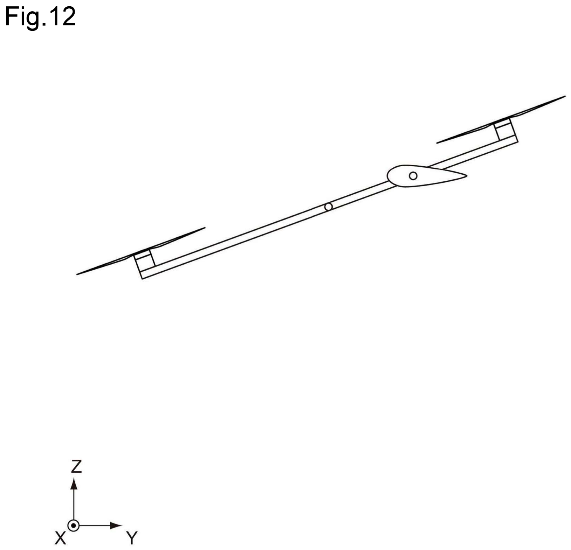

As illustrated in FIGS. 10 to 12, the mounting position of the auxiliary wing unit 50 on the flight vehicle 100 may be provided at the same point as the center or the center of gravity of the flight vehicle in the front-rear direction (Y direction), in front of the center or the center of gravity of the flight vehicle, or behind the center or the center of gravity of the flight vehicle. In the X direction, the mounting positions are preferably provided symmetrically in the left-right direction with respect to the center or the center of gravity of the flight vehicle. Also, in the upper-lower direction (Z direction), the mounting position may be provided at the center or the center of gravity of the flight vehicle, above the center or the center of gravity of the flight vehicle, or below the center or the center of gravity of the flight vehicle, as illustrated in FIGS. 10, 13 and 14. For example, when the auxiliary wing unit 50 is provided below the center of gravity of the flight vehicle, the auxiliary wing unit 50 acts as an aerodynamic drag when being exposed to wind from the front-rear and left-right directions while hovering. Therefore, a moment causing the airframe to tilt windward is generated. This phenomenon causes the airframe to tilt windward, causes the direction of thrust of the propeller to tilt windward, and increases the force against the wind, thus stabilizing the attitude of the flight vehicle.

The parts included in the flight vehicle 100 may be connected to one another by welding, fixing members, and/or other ways, or some or all of the parts may be formed into a single piece using a monocoque structure or integral molding (for example, the motor mounts and the frame 120 may be formed into a single piece, or all of the motor mounts, the frame 120, and the body 150 may be formed into a single piece). By integrating the parts into a single piece, joints between the parts can be made smoother, and thus, effects of a reduction in drag and an improvement in fuel efficiency can be expected due to such a shape of the flight vehicle as to be called a blended wing body or a lifting body.

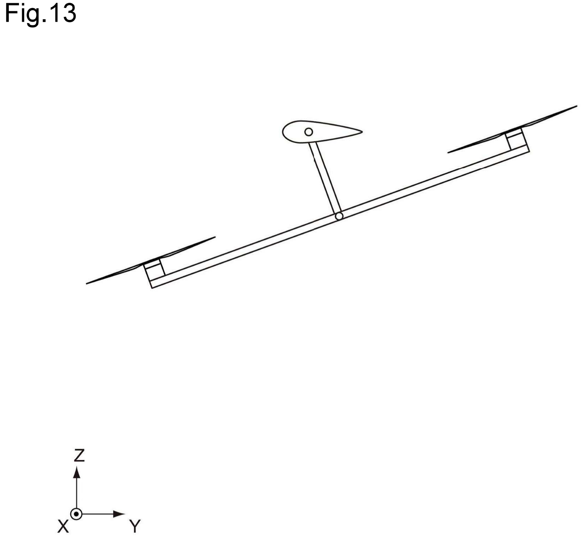

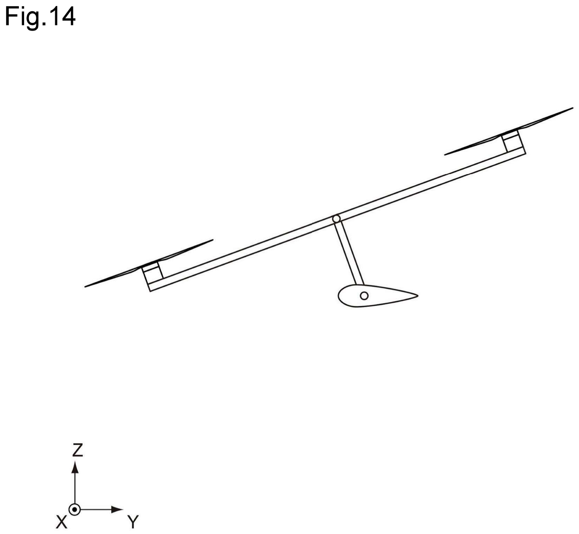

For example, FIGS. 13 and 14 are illustrated in a simplified form to facilitate the explanation of the positional relation of the auxiliary wing, but in practice, the support member supporting the auxiliary wing unit 50 need not be a long and thin vertically protruding support member in side view as illustrated in the figures, and may be a support member having any shape. For example, the support member may be configured such that a part or the whole thereof is built into the body (exterior) of the flight vehicle 100, and may thus be provided while causing the shape of the body to restrain the drag from being increased by the support member of the auxiliary wing unit 50.

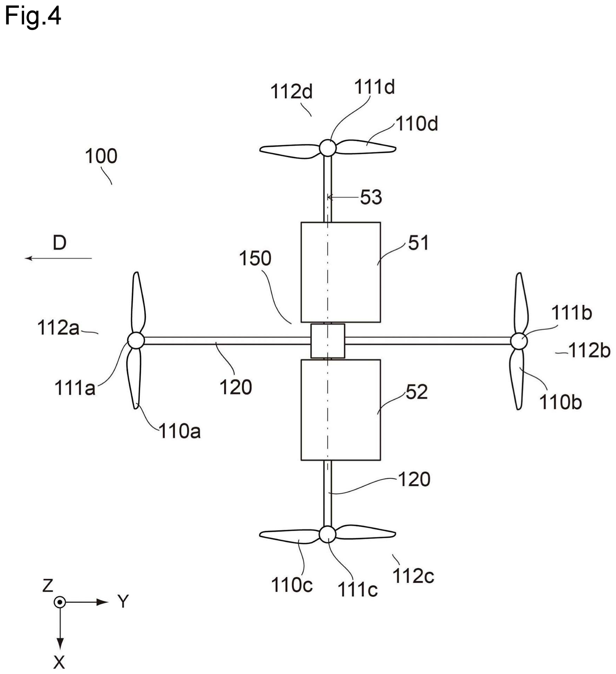

The auxiliary wing unit 50 may have one, two, or more wings. As illustrated in FIG. 4, a configuration can be considered in which one first auxiliary wing 51 and one second auxiliary wing 52 are provided so as to extend in X-axis directions from the center of the flight vehicle. The auxiliary wing unit 50 is mounted so as to be swingable or rotatable about an auxiliary wing rotation axis 53.

The auxiliary wing unit 50 may be rotatable by 360 degrees, or rotatable within any specified angle range. The location of the auxiliary wing rotation axis 53 is preferably a location where the rotation of the auxiliary wing unit 50 does not cause imbalance or instability in the flight. For example, the location may be provided at a location approximately 25% of the chord length of the auxiliary wing unit 50 from the leading edge thereof.

The auxiliary wing rotation axis 53 is provided substantially along the X-axis direction so as to rotate the auxiliary wing unit 50 in the pitch direction.

A mechanism used to displace the auxiliary wing unit 50 only needs to be a mechanism capable of performing a predetermined rotation, and preferably employs a preferred known method. For example, servos and actuators (motors, cylinders) and the like may be used, or any other mechanical components may be used to control the displacement. The mechanism may be configured to be locked at a predetermined angle, and may be configured to be temporarily unlockable.

The amount of displacement of the auxiliary wing unit 50 may be changeable in one step, or may be changeable in multiple steps or in no step. The auxiliary wing unit 50 is preferably a mechanism that can maintain a displaced state at least temporarily. For example, a predetermined displacement limitation time may be provided after the displacement control, and the next displacement control may be performed according to a change in parameter after the displacement limitation time has elapsed, or hysteresis control may be performed by differentiating a displacement control reference value (a reference parameter to be described later, also referred to as a reference parameter for increase) for performing the displacement control when the parameter increases from a displacement control reference value (also referred to as a reference parameter for decrease) when the parameter decreases.

As a layout example when four rotor blade units 12 are provided, the four rotor blade units 112 are provided, for example, on the front, rear, left, and right of the body 150. In this situation, the propeller 110 may be used in either a push or pull configuration. In addition to a method where all four propellers have the push configuration and a method where all four propellers have the pull configuration, combined methods can be assumed where propellers different between front and rear with respect to the body 105 are used; that is, only two front propellers 110 have the push configuration and two rear propellers 110 have the pull configuration, or in contrast, only the two rear propellers 110 have the push configuration and the two front propellers 110 have the pull configuration.

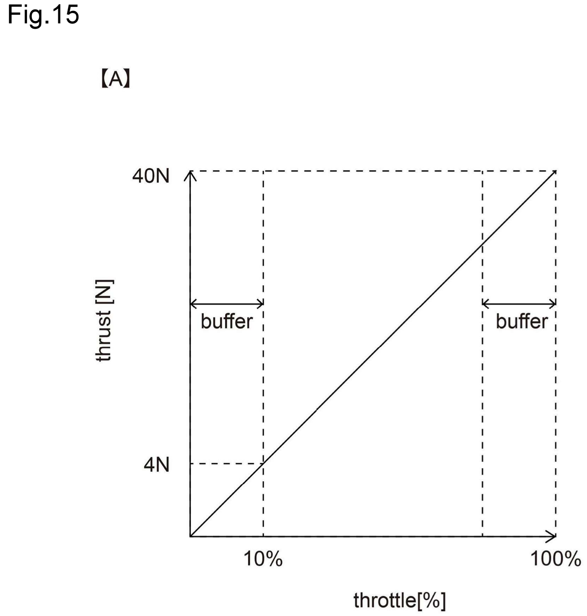

As illustrated in graph A in FIG. 15, the thrust generated by the operation of the rotor blade unit 112 varies with a degree of throttle opening (throttle). The degree of throttle opening varies with a command value (pulse width modulation (PMW)) transmitted from the flight controller to an electronic speed control (ESC) or the rotor blade units 112.

Graph A is intended to plainly explain the relation between the thrust and the throttle opening degree, and is not intended to indicate specific numerical values in a limited manner, for example. Even when the rotor blade units 112 having the same configuration are used, the thrust varies depending on airflow conditions.

Since the degree of throttle opening has both upper and lower limit values, the rotor blade units 112 are controlled at values within a range. At this time, a buffer is provided between the lower and upper limit values so as not to be brought into an out-of-control situation by external factors such as wind gusts. In particular, if the throttle opening degree approaches the lower limit, the thrust produced by the rotor blade units 112 decreases and the force to control the attitude of the flight vehicle 100 may be insufficient.

For example, if the flight vehicle 100 enters an updraft or enters an airflow including upward components, an upward force is applied to the flight vehicle. At this time, since a flight altitude is specified as flight route information for the flight vehicle 100, in order to cause the flight vehicle to maintain predetermined altitude without ascending in response to the upward force, the flight controller 1001 needs to control the rotor in order to attenuate the thrust, in other words, needs to perform control to decrease the degree of throttle opening. However, as described above, the limit values are present for the degree of throttle opening. In cases where the airflow is strong, a limit value may be reached to make the control difficult, which may destabilize the attitude of the flight vehicle, and may cause the flight vehicle to crash. One way to deal with such a situation is to stop maintaining the altitude and allow the flight vehicle to ascend so that the degree of throttle opening is made an amount that can be used to control the airframe, but the external factors more preferably do not cause a behavior of deviating from the pre-specified flight altitude.

In the embodiment of the present disclosure, when the degree of throttle opening is below a predetermined value due to the external factors, the angle of attack of the auxiliary wing unit 50 is controlled to change negatively. Various methods are present for acquiring and calculating values related to the degree of throttle opening, and an example will be described below for details of parameters and the like. The auxiliary wing unit 50, the angle of attack of which has been controlled to become negative, generates a downward lift, which enables the flight vehicle to maintain the altitude even if the degree of throttle opening is increased, and makes the degree of throttle opening controllable so as not to reach the lower limit value.

The operation of the auxiliary wing unit 50 is controlled by the flight controller 1001.

The flight controller 1001 controls the operation of the auxiliary wing unit 50 by acquiring parameters related to the flight vehicle 100 during flight (in particular, parameters that are related to the thrust of the flight vehicle 100 and are each hereinafter referred to as a thrust-related parameter). As a reference for control, a value serving as a reference (hereinafter collectively referred to as a "reference parameter") may be stored in advance in a predetermined storage, such as the memory 1004. As a result, the flight controller 1001 can compare the reference parameter read out from the storage with the thrust-related parameters acquired during the flight and control the operation of the auxiliary wing unit 50 when the comparison result (for example, a difference value) becomes a specified value. One reference parameter may be provided as described above; a plurality of steps of parameters may be provided; or reference parameters may differ between when increasing and when decreasing.

Various types of numerical information can serve as the thrust-related parameters and the reference parameters. Examples of the numerical information include, but are not limited to, numerical values of proportional-integral-derivative (PID) control, thrust control information on the rotor blade unit 112 (PMW control information, rotational speed information on the motor 111, and power supply information to the rotor blade unit 112), velocity information (airspeed information, ground speed information) on the flight vehicle 100, and altitude information on the flight vehicle 100. Any information suitable for controlling the auxiliary wing unit 50 can be used as long as the thrust of the flight vehicle 100 can be directly or indirectly obtained. The numerical information used for the parameters may be one type, or two or more types of numerical information. When a plurality of types of numerical values are used, the change control of the angle of attack of the auxiliary wing unit 50 may be performed by performing the comparison process described above using an AND condition (satisfied when both references are met), or the change control of the angle of attack of the auxiliary wing unit 50 may be performed by performing the comparison process described above using an OR condition (satisfied when either reference is met). When multiple types of numerical values are used, the angle of attack of the auxiliary wing unit 50 may be subjected to the change control through the comparison process described above by weighting each parameter in particular or by setting a priority order for each parameter and applying priority.

To change the lift generated by the auxiliary wing unit 50, the flight controller 1001 rotates the auxiliary wing unit 50 in the pitch direction using the rotation axis 53 as the change control described above. The angle of attack of the auxiliary wing unit 50 is changed negatively or positively depending on the direction of rotation (forward tilt or backward tilt). As the angle of attack changes, the direction and strength of the lift generated by the auxiliary wing unit 50 also changes. The change control is performed according to the results of the comparison between the thrust-related parameters and the reference parameters or other conditions. In particular, rotation instruction information specifying a correspondence relation of the results of the comparison to the direction of rotation and the amount of rotation of the auxiliary wing unit 50 (for example, information specifying a correspondence relation such that, if the difference value between the thrust-related parameter and the reference parameter becomes a numerical value X, the rotation axis is rotated forward in the pitch direction by Y degrees) may be stored in the predetermined storage, such as the memory 1004, and the flight controller 1001 may refer to the rotation instruction information during the comparison process.

The first and the second auxiliary wings 51 and 52 included in the auxiliary wing units 50 are commonly controlled, and the directions and amounts of the rotation are the same. The effect of the auxiliary wing unit 50 differs from that of a movable wing (aileron) provided on a main wing of general fixed-wing aircraft. That is, the auxiliary wings on the left and right sides do not rotate in directions different from each other to control the roll and yaw directions of the flight vehicle, but rotate in the same direction (in particular, in the pitch direction) to generate a negative or positive lift.

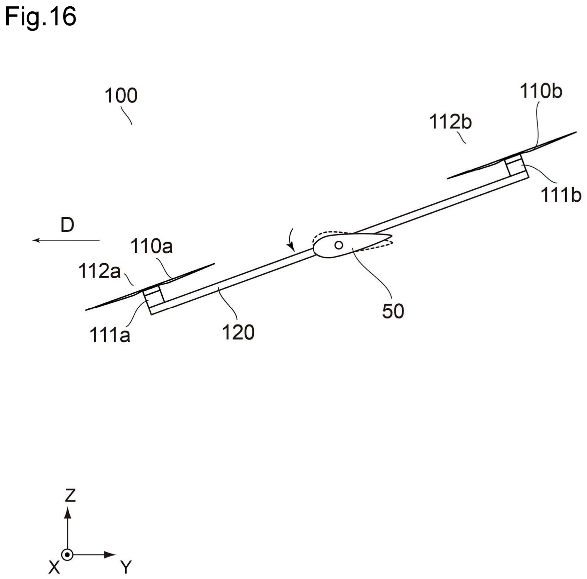

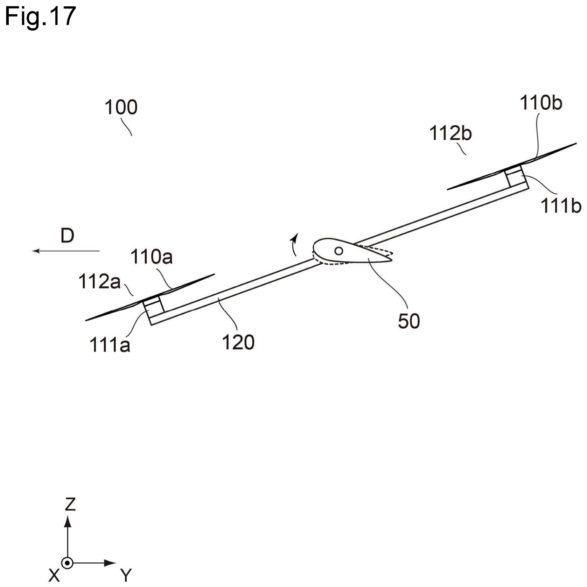

The flight controller 1001 may perform the determination and execution of the change control based on the results of the comparison between the reference parameters and the thrust-related parameters, as described above. For example, the reference parameters may include a predetermined numerical value indicating the lower or upper limit of the thrust-related parameter (in particular, the lower or upper limit made closer to a median by an amount of a buffer, as illustrated in FIG. 15). That is, as a result of the comparison process, if the thrust-related parameters obtained from the flight vehicle 100 during flight are lower than the value of the reference parameter (for example, the lower limit) that is relatively small, the thrust-related parameters may be too small because the lift of the auxiliary wing unit 50 is large in maintaining the altitude of the flight vehicle 100. Therefore, in order to reduce the lift of the auxiliary wing unit 50, the change control to tilt forward the auxiliary wing unit 50 in the pitch direction compared with the current state by rotating the rotation axis 53 forward in the pitch direction (in particular, the change control to tilt the auxiliary wing unit 50 more forward than a horizontal state to a state of a negative angle of attack, as illustrated in FIG. 16) can be performed. In contrast, if the thrust-related parameters are higher than the upper limit value, the thrust-related parameters may be too large because the lift of the auxiliary wing unit 50 is small (or negative) in maintaining the altitude of the flight vehicle 100. Therefore, in order to increase the lift of the auxiliary wing unit 50, the change control to tilt backward the auxiliary wing unit 50 in the pitch direction compared with the current state by rotating the rotation axis 53 backward in the pitch direction (in particular, the change control to tilt the auxiliary wing unit 50 more forward than the horizontal state to a state of positive angle of attack, as illustrated in FIG. 17) can be performed.

The predetermined numerical value or values included in the reference parameters that can serve as a condition for executing the change control may be at least one or both of the upper and lower limits. The change control may be performed stepwise by providing a plurality of reference values between the upper and lower limits. For example, by storing the reference parameters and the amount and direction of rotation of the auxiliary wing unit 50 in 10 steps for the thrust-related parameters (such as the degree of throttle opening) in the predetermined storage, such as the memory 1004, the lift generated by the auxiliary wing unit 50 can be adjusted to a more appropriate value by the flight controller 1001 according to the magnitude of the effect of the air flow on the flight vehicle. Almost stepless adjustment may be performed by increasing the number of steps.

The change control of the auxiliary wing unit 50 may be determined and performed by the flight controller 1001 based on other conditions instead of, or in addition to, the conditions resulting from of the comparison between the reference parameters and the thrust-related parameters, as described above. The flight controller 1001 may use a method of determining a predetermined position and behavior of the flight vehicle at the time of, for example, hovering, landing, or taking off, and performing the change control according to the results of the determination.

When hovering, the auxiliary wing unit 50 is preferably exposed to wind from the front of the wing. As an exemplary method of control performed during hovering, in order to make the wing directly face the wind (direct the leading edge of the auxiliary wing unit 50 to the windward direction), the flight controller 1001 calculates the direction of the wind based on the sensing information from the sensors 1002 and the state of control of the rotor blades and the like, and changes the orientation of the flight vehicle. The flight vehicle 100 may also be provided with a vertical tail wing as a method of control by hardware instead of software control. The vertical tail wing catches wind from a lateral side, naturally causing the flight vehicle to directly face the wind.

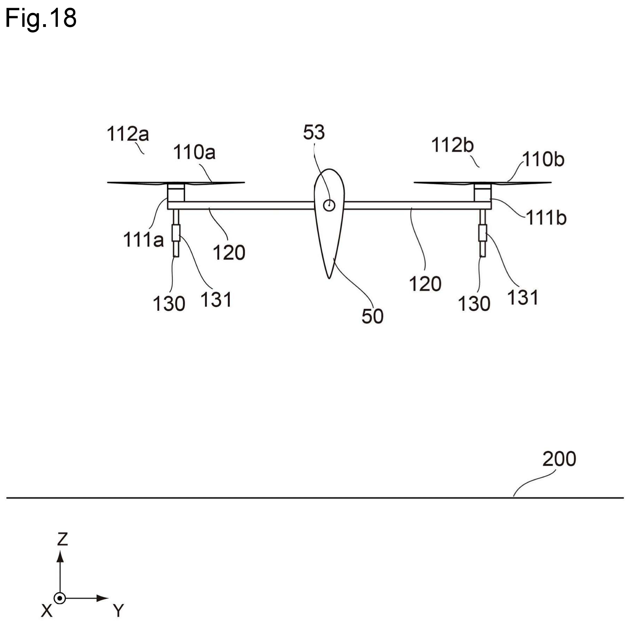

When the wing is not controlled to directly face the wind, the flight controller 1001 may control the auxiliary wing unit 50 in order to rotate the auxiliary wing unit 50 by approximately 90 degrees. When the wing is approximately vertical to the XY plane as illustrated in FIG. 18, an aerodynamic force such as a lift is difficult to be generated even if the upper or lower surface of the wing is exposed to wind, so that the flight vehicle is only pushed in a lateral direction (XY direction). At this time, the center of the aerodynamic drag (aerodynamic center) received by the auxiliary wing unit 50 is below the position of the center of gravity of the flight vehicle 100. When the rotation axis 53 is located approximately 25% of the chord length of the auxiliary wing unit 50 from the leading edge thereof, the flight vehicle is configured to easily face the wind due to the force of the wind.

During landing, the auxiliary wing unit 50 also preferably directly face the wind in the same way as during hovering. If the flight vehicle 100 receives a landing instruction while cruising, the flight controller 1001 may control the auxiliary wing unit 50 in order to cause the auxiliary wing unit 50 to directly face the wind, as described above. When the flight vehicle is about to land, if, in particular, the wind includes an upward component such as an updraft, the flight controller 1001 preferably performs the change control of the auxiliary wing unit 50 to rotate the auxiliary wing unit 50 so as to have a negative angle of attack. This operation prevents the degree of throttle opening from reaching the lower limit and allows the flight vehicle to land stably.

During takeoff, the wing also preferably directly face the wind in the same way as during hovering. When the flight vehicle 100 takes off, the flight controller 1001 may control the auxiliary wing unit 50 in order to cause the auxiliary wing unit 50 to directly face the wind, as described above. When the flight vehicle 100 is taking off, if the wind including a downward component such as a downdraft blows, the flight controller 1001 preferably performs the change control of the auxiliary wing unit 50 to rotate the auxiliary wing unit 50 so as to have a positive angle of attack. This operation allows the flight vehicle to ascend not only using the thrust generated by the rotor blade unit 112, but also further using the lift generated by the auxiliary wing unit 50.

The change control of the auxiliary wing unit 50 is not only automatically performed by the flight controller 1001, but may also be performed manually or semiautomatically by a person directly or indirectly monitoring the status of the flight vehicle and using the proportional control system, ground control stations (GCSs), and so forth, using a control device such as the flight controller 1001. The displacement control of the auxiliary wing unit 50 may not only be automatically performed by the flight controller 1001, but also be performed by executing one, some, or all of the above-described processes, such as storing, acquiring, comparing, and determining various types of information, using an external control device, such as a terminal device (for example, a personal computer (PC) or the like) or a server outside the flight vehicle 100. In the flight vehicle 100 that is capable of autonomous flight, the control of the auxiliary wing unit 50 may also be settable as well as the route and operation of the flight vehicle 100 that are set in advance or during the flight. Other information on the flight vehicle, such as a tilt angle and a forward velocity thereof, may be collected by sensors or the like, and automatically adjusted to achieve a preferable amount of displacement.

### First Modification

In addition to the configuration of the embodiment described above, at least at the time of either the landing or the takeoff, stop condition information indicating conditions for stopping (including invalidating) the change control of the auxiliary wing unit 50 described above is read out by the control device such as the flight controller 1001, and compared with corresponding status information indicating the current status ("thrust-related parameters", "landing instruction information", "takeoff instruction information", "waypoint information", "current position information", "change control record information", and so forth to be described later), and the change control of the auxiliary wing unit 50 is stopped for a predetermined period of time according to the result information on the comparison processing (in particular, the result information determining that the conditions are met).

Examples of the stop condition information at the time of landing are listed below.
(1) Information indicating that the control device such as the flight controller 1001 has compared a thrust-related parameter (in particular, the current thrust-related parameter or the immediately preceding thrust-related parameter) acquired by the control device with a stop reference value (in particular, a value smaller than the minimum value of the reference parameter used for the change control) stored in advance in the predetermined storage such as the memory 1004, and the control device has determined that thrust-related parameter is below the stop reference value.
(2) Information indicating that the control device such as the flight controller 1001 has determined that the landing instruction information has been acquired by the control device.
(3) Information indicating that the control device such as the flight controller 1001 has compared the current waypoint information (target position information set in advance for the autonomous flight of the flight vehicle 100) acquired by the control device with stop reference waypoint information stored in advance in the predetermined storage such as the memory 1004, and the control device has determined that the current or the next waypoint has reached the stop reference waypoint.
(4) Information indicating that the control device such as the flight controller 1001 has compared the current position information (such as latitude and longitude information and the altitude information) acquired by the control device with stop reference position information (that may be information indicating a specific position or information indicating a specific position range) stored in advance in the predetermined storage such as the memory 1004, and the control device has determined that the current position information has reached the stop reference position information.

Examples of control start condition information at the time of takeoff are listed below.
(1) Information indicating that the control device such as the flight controller 1001 has compared the thrust-related parameter (in particular, the current thrust-related parameter or the immediately preceding thrust-related parameter) acquired by the control device with a start reference value (in particular, a value below the minimum value of the reference parameter used for the change control) stored in advance in the predetermined storage such as the memory 1004, and the control device has determined that thrust-related parameter is above the start reference value.
(2) Information indicating that the control device such as the flight controller 1001 has determined that the takeoff instruction information has been acquired by the control device.
(3) Information indicating that the control device such as the flight controller 1001 has compared the current waypoint information (target position information set in advance for the autonomous flight of the flight vehicle 100) acquired by the control device with start reference waypoint information stored in advance in the predetermined storage such as the memory 1004, and the control device has determined that the current or the next waypoint has reached the start reference waypoint.
(4) Information indicating that the control device such as the flight controller 1001 has compared the current position information (such as the latitude and longitude information and the altitude information) acquired by the control device with start reference position information (that may be information indicating a specific position or information indicating a specific position range) stored in advance in the predetermined storage such as the memory 1004, and the control device has determined that the current position information has reached the start reference position information.

Examples of other items of the control start condition information are listed below.
(1) Information indicating that the control device such as the flight controller 1001 has compared change control record information (for example, a rotation angle, a rotation amount, control timing, and so forth at the time of the change control) acquired by the control device with reference control timing information (in particular, reference elapsed time information serving as a reference for determination of time elapsed from control timing when the previous change control was performed) stored in advance in the predetermined storage such as the memory 1004, and the control device has determined that the time elapsed from the control timing in the change control record information to the present time has not reached the reference elapsed time information.

### Second Modification

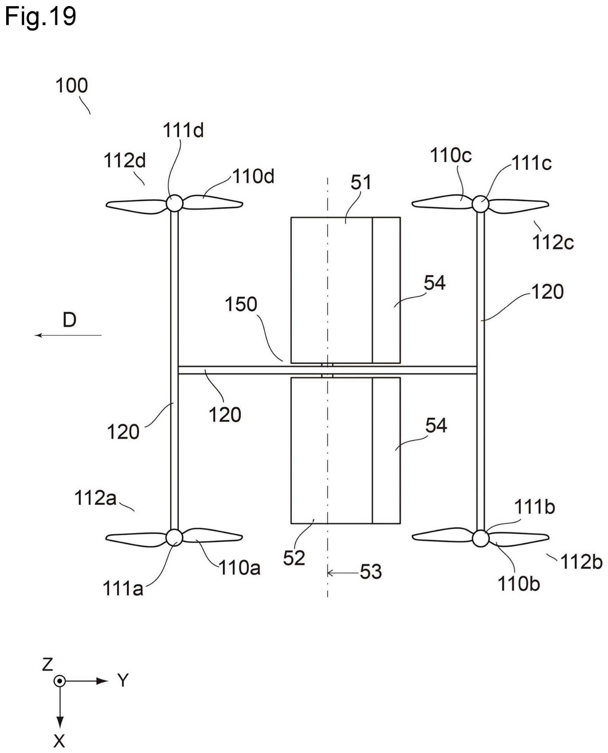

The auxiliary wing unit 50 may include a resistance member 54, as illustrated in FIG. 19. The control device such as the flight controller 1001 can change the lift generated by the auxiliary wing unit 50 by moving the resistance member 54.

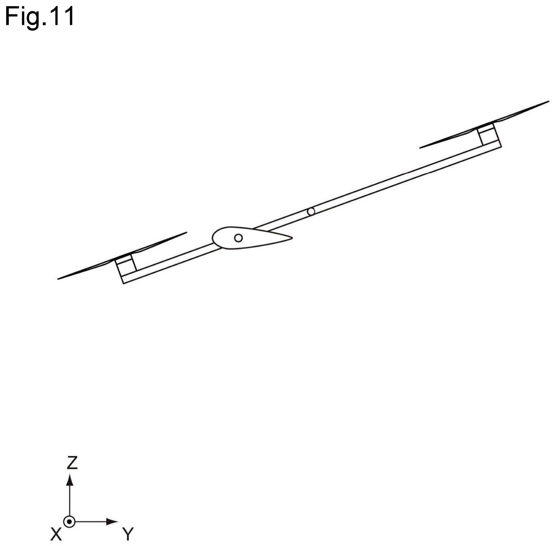

The resistance member 54 is provided so as to be capable of controlling the displacement of the auxiliary wing unit 50. For example, the resistance member 54 may be connected so as to be rotatable in the pitch direction. The same mechanism as that of the auxiliary wing unit 50 may be used for the rotation operation. The resistance member 54 may be connected so as to be displaceable by a deformation mechanism by sliding, bending, or extension and contraction of an arm. The resistance member 54 may be provided at the rear end of the auxiliary wing unit 50, provided at least one of the upper and lower surfaces of the auxiliary wing unit 50 (in particular, behind the rotation axis 53), or provided as a separate body from the auxiliary wing unit 50, in front of, at the rear of, above, or below the auxiliary wing unit 50, as in the auxiliary wing unit 50 illustrated in FIGS. 11 to 14. The resistance member 54 may have, for example, a three-dimensional shape, such as a rod shape or a plate shape.

For example, if the thrust-related parameters acquired from the flight vehicle 100 while flying are below the value of a relatively small reference parameter (such as the lower limit value) as a result of the comparison processing, the thrust-related parameters may be too small because the lift of the auxiliary wing unit 50 is large for maintaining the altitude of the flight vehicle 100. Therefore, the displacement control is performed so as to increase the area of the airframe viewed from the front by an area viewed from the front of the resistance member 54 by displacing the resistance member 54 so as to rise upward on the upper side of the auxiliary wing unit 50 or fall downward on the lower side of the auxiliary wing unit 50 as compared with the current state (which can also be said to be control to increase the aerodynamic drag of the auxiliary wing unit 50 by the aerodynamic drag of the resistance member 54, or control to reduce the lift of the auxiliary wing unit 50). In contrast, if the thrust-related parameters are above the upper limit value, the thrust-related parameters may be too large because the lift of the auxiliary wing unit 50 is small (or negative) while maintaining the altitude of the flight vehicle 100. Therefore, the displacement control is performed so as to decrease the area of the airframe as viewed from the front by an area viewed from the front of the resistance member 54 by displacing the resistance member 54 so as to be closer to (laid down toward) the upper side of the auxiliary wing unit 50 or to be closer to the lower side of the auxiliary wing unit 50 (which can also be said to be control to decrease the aerodynamic drag of the auxiliary wing unit 50 by the aerodynamic drag of the resistance member 54, or control to increase the lift of the auxiliary wing unit 50).

The amount of displacement of the resistance member 54 may be changeable in one step, in multiple steps, or in no step, in the same way as the auxiliary wing unit 50. The resistance member 54 is preferably a mechanism that can maintain the displaced state.

### Third Modification

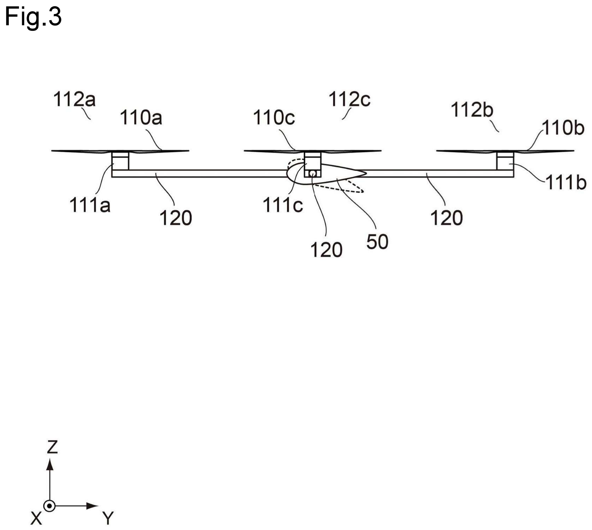

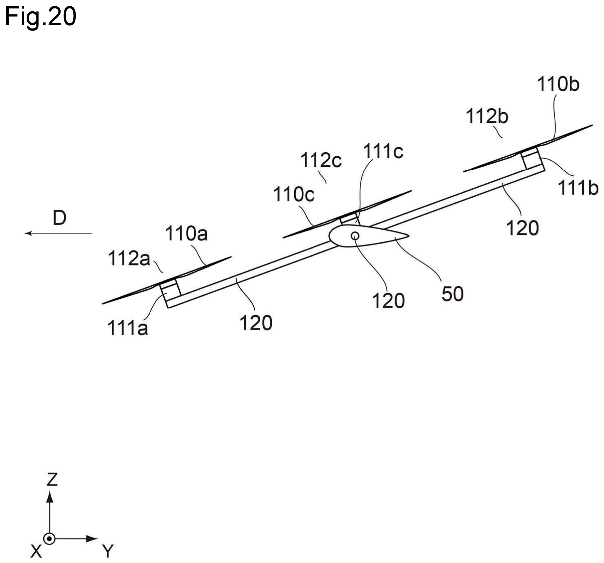

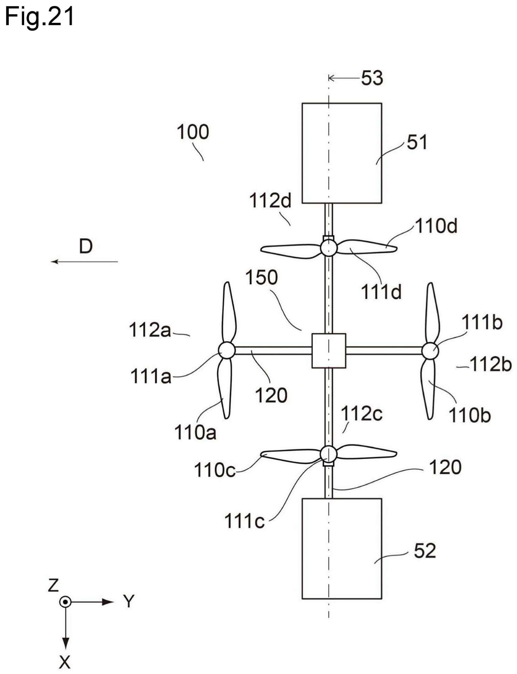

In the embodiment described above, the auxiliary wing units 50 (first and the second auxiliary wings 51 and 52) are provided inside the left and right rotor blade units 112c and 112d, respectively, as illustrated in FIGS. 3 and 4 and other drawings. However, the auxiliary wing units 50 (first and the second auxiliary wings 51 and 52) of a third modification of the present embodiment are provided outside the left and right rotor blade units 112c and 112d, respectively, as illustrated in FIGS. 20 and 21.

The same effects as in the embodiment described above can be obtained also in the flight vehicle 100 of the third modification illustrated in FIGS. 20 and 21.

Also, in the configuration of the auxiliary wing unit 50 of the third modification illustrated in FIGS. 20 and 21, in the same way as the illustrations in FIGS. 10 to 12, the mounting position of the auxiliary wing unit 50 on the flight vehicle 100 may be provided at the same point as the center or the center of gravity of the flight vehicle in the front-rear direction (Y direction), in front of the center or the center of gravity of the flight vehicle, or behind the center or the center of gravity of the flight vehicle. In the X direction, the mounting positions are preferably provided symmetrically in the left-right direction with respect to the center or the center of gravity of the flight vehicle. Also, in the upper-lower direction (Z direction), the mounting position may be provided at the center or the center of gravity of the flight vehicle, above the center or the center of gravity of the flight vehicle, or below the center or the center of gravity of the flight vehicle, in the same way as the illustrations in FIGS. 10, 13, and 14.

Furthermore, the auxiliary wing unit 50 of the third modification illustrated in FIGS. 20 and 21 may be provided by extending the frame 120 on which the left and right rotor blade units 112c and 112d are mounted outward in the direction of extension, but alternatively or in addition, a separate extension frame (not illustrated) may be connected to the frame 120 by a known way of fixing, and the auxiliary wing unit 50 may be connected to the extension frame. Furthermore, only the extension frame may be configured to be rotatable by providing a device for rotation together with the extension frame. As a more specific example, the device for rotation may have a configuration fixable on one side to the frame 120, include inside a driver such as a motor, and be capable of rotating the extension frame extending toward the other side in the circumferential direction. The fixable configuration may be, for example, a known configuration for fixing tubular members to each other, such as a configuration that is tubular when the frame 120 is tubular, has a diameter different the frame 120, can be inserted into or can insert the frame 120, and fixes both frames using through-members such as screws or rivets or by welding. When the frame 120 and the extension frame extending from the auxiliary wing unit 50 have the same diameter or are rod-shaped members of different shapes, the frame 120 and the extension frame may be connected together using joint members such as pipe connection fittings or straight joints. When the joint members include hinges or bearings, the extension frame can be rotated independently of the frame 120. Since the extension frame and the auxiliary wing are rotated by the driver that can rotate the extension frame, the shape of the extension frame no longer needs to be a perfect circle. Therefore, the extension frame may have a shape causing smaller drag (for example, airfoil shape).

### Fourth Modification

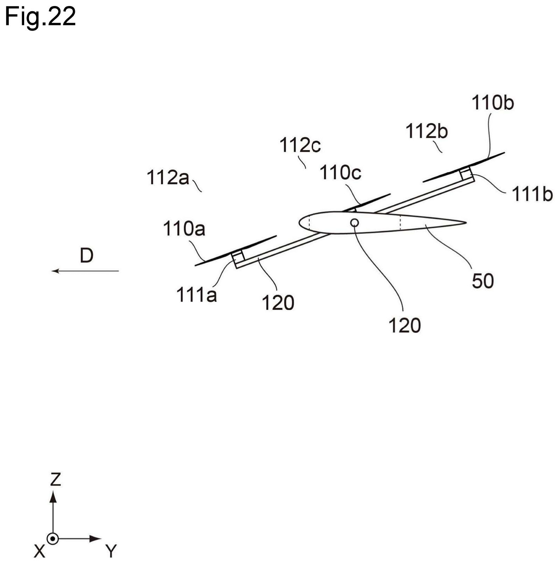

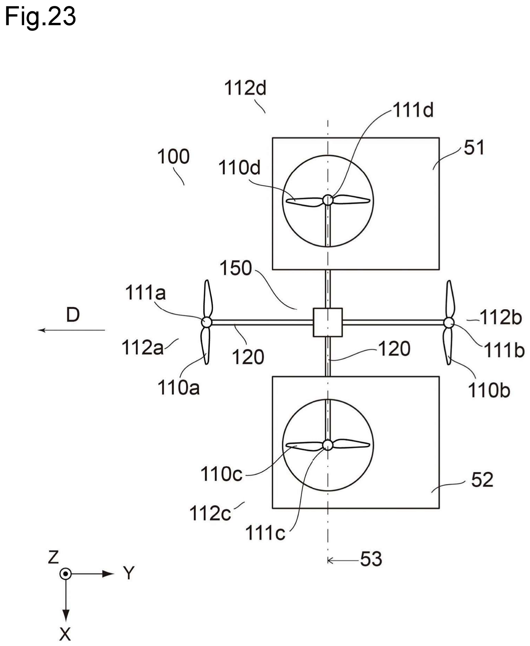

In the embodiment described above, the auxiliary wing units 50 (first and the second auxiliary wings 51 and 52) are provided inside the left and right rotor blade units 112c and 112d, respectively, as illustrated in FIGS. 3 and 4 and other drawings. However, in a fourth modification of the present embodiment, the left and right rotor blade units 112c and 112d are provided in through-holes (holes that penetrate in the upper-lower direction) provided in the auxiliary wing units 50 (first and the second auxiliary wings 51 and 52), respectively, as illustrated in FIGS. 22 and 23.

The same effects as in the embodiment described above can be obtained also in the flight vehicle 100 of the fourth modification illustrated in FIGS. 22 and 23.

Also, in the configuration of the auxiliary wing unit 50 of the second modification illustrated in FIGS. 22 and 23, in the same way as the illustrations in FIGS. 10 to 12, the mounting position of the auxiliary wing unit 50 on the flight vehicle 100 may be provided at the same point as the center or the center of gravity of the flight vehicle in the front-rear direction (Y direction), in front of the center or the center of gravity of the flight vehicle, or behind the center or the center of gravity of the flight vehicle. In the X direction, the mounting positions are preferably provided symmetrically in the left-right direction with respect to the center or the center of gravity of the flight vehicle. Also, in the upper-lower direction (Z direction), the mounting position may be provided at the center or the center of gravity of the flight vehicle, above the center or the center of gravity of the flight vehicle, or below the center or the center of gravity of the flight vehicle, in the same way as the illustrations in FIGS. 10, 13, and 14.

The configuration of the flight vehicle in each of the embodiment and the modifications can be achieved by combining a plurality of configurations of the flight vehicle. Preferable configurations are desirably considered as appropriate according to the cost in manufacturing the flight vehicle and environments and characteristics of locations where the flight vehicle is operated.

The embodiment and the modifications described above are merely examples to facilitate understanding of the present technology, and are not to be construed as limiting the present disclosure. It is needless to say that the present disclosure may be modified and improved without departing from the gist thereof, and the present disclosure includes equivalents of the modifications or the improvements.

### Reference Signs List

- 10: Load
- 20: Loading portion
- 22: Load rotating pivot
- 30: Enclosed space
- 50: Auxiliary wing unit
- 51: First auxiliary wing
- 52: Second auxiliary wing
- 53: Auxiliary wing rotation axis
- 100: Flight vehicle
- 110a to 110h: Propellers
- 111a to 111h: Motors
- 112a to 112h: Rotor blade units
- 120: Frame
- 130: Landing gear leg
- 131: Damper
- 150: Body
- 200: Landing surface (arrival surface)
- 1000: Battery
- 1001: Flight controller
- 1002: Sensors etc.
- 1003: Gimbal
- 1004: Transceiver
- 1006: Transceiver (proportional control system)

## Claims

1. A flight vehicle comprising:
a body;
a plurality of rotor blade units provided on the body;
an auxiliary wing unit provided on the body; and
a control unit configured to control operation of the rotor blade units and the auxiliary wing unit, wherein
the control unit performs change control of a lift of the auxiliary wing unit according to a result of comparison between an acquired thrust-related parameter and one or more reference parameters.

2. The flight vehicle according to claim 1, wherein the control unit performs the change control so as to reduce the lift of the auxiliary wing unit when the thrust-related parameter is determined to be below a predetermined reference parameter.

3. The flight vehicle according to claim 2, wherein the change control is control to tilt forward the auxiliary wing unit from a current state.

4. The flight vehicle according to claim 2, wherein the change control is control to tilt forward the auxiliary wing unit to a negative angle of attack.

5. The flight vehicle according to claim 1, wherein the control unit performs the change control so as to increase the lift of the auxiliary wing unit when the thrust-related parameter is determined to be above a predetermined reference parameter.

6. The flight vehicle according to claim 5, wherein the change control is control to tilt backward the auxiliary wing unit from a current state.

7. The flight vehicle according to claim 5, wherein the change control is control to tilt backward the auxiliary wing unit to a positive angle of attack.

8. The flight vehicle according to claim 2 or 5, wherein the change control displaces a resistance member provided on the auxiliary wing unit.

9. The flight vehicle according to claim 1, wherein
the reference parameter includes two or more parameters, and
the control unit performs the change control stepwise according to results of comparison between the thrust-related parameter and the two or more parameters.

10. The flight vehicle according to claim 1, wherein
the reference parameter includes a reference parameter for increase and a reference parameter for decrease, and
the control unit performs the change control using the reference parameter for increase in the comparison process when the thrust-related parameter increases and using the reference parameter for decrease in the comparison process when the thrust-related parameter decreases.

11. The flight vehicle according to claim 1, wherein the control unit performs, during landing, a process to compare stop condition information indicating conditions on the thrust-related parameter for stopping the change control of the auxiliary wing unit with the acquired thrust-related parameter, and stops the change control of the auxiliary wing unit for a predetermined period according to result information on the comparison process.

12. The flight vehicle according to claim 1, wherein the control unit stops the change control of the auxiliary wing unit for a predetermined period in response to a determination that landing instruction information has been acquired.

13. The flight vehicle according to claim 1, wherein the control unit performs, during landing, a process to compare stop condition information indicating conditions on a waypoint for stopping the change control of the auxiliary wing unit with acquired current waypoint information, and stops the change control of the auxiliary wing unit for a predetermined period according to result information on the comparison process.

14. The flight vehicle according to claim 1, wherein the control unit performs, during landing, a process to compare stop condition information indicating conditions on position information for stopping the change control of the auxiliary wing unit with acquired current position information, and stops the change control of the auxiliary wing unit for a predetermined period according to result information on the comparison process.

15. The flight vehicle according to claim 1, wherein the control unit performs, during takeoff, a process to compare start condition information indicating conditions on the thrust-related parameter for stopping the change control of the auxiliary wing unit with the acquired thrust-related parameter, and stops the change control of the auxiliary wing unit for a predetermined period according to result information on the comparison process.

16. The flight vehicle according to claim 1, wherein the control unit stops the change control of the auxiliary wing unit for a predetermined period in response to a determination that takeoff instruction information has been acquired.

17. The flight vehicle according to claim 1, wherein the control unit performs, during takeoff, a process to compare stop condition information indicating conditions on a waypoint for stopping the change control of the auxiliary wing unit with acquired current waypoint information, and stops the change control of the auxiliary wing unit for a predetermined period according to result information on the comparison process.

18. The flight vehicle according to claim 1, wherein the control unit performs, during takeoff, a process to compare stop condition information indicating conditions on position information for stopping the change control of the auxiliary wing unit with acquired current position information, and stops the change control of the auxiliary wing unit for a predetermined period according to result information on the comparison process.

19. The flight vehicle according to claim 1, wherein the control unit performs a process to compare change control record information including control timing when the change control was performed with reference control timing information, and stops the change control of the auxiliary wing unit for a predetermined period according to result information on the comparison process.

20. The flight vehicle according to claim 1, wherein the thrust-related parameter is thrust control information on the rotor blade units.

21. The flight vehicle according to claim 20, wherein the thrust-related parameter is pulse width modulation (PWM) control information on the rotor blade units.

22. The flight vehicle according to claim 20, wherein the thrust-related parameter is rotational speed information on the rotor blade units.

23. The flight vehicle according to claim 20, wherein the thrust-related parameter is power supply information to the rotor blade units.

24. The flight vehicle according to claim 1, wherein the thrust-related parameter is velocity information.

25. The flight vehicle according to claim 24, wherein the thrust-related parameter is airspeed information.

26. The flight vehicle according to claim 24, wherein the thrust-related parameter is ground speed information.

27. The flight vehicle according to claim 1, wherein the thrust-related parameter is altitude information.

28. The flight vehicle according to claim 1, wherein the auxiliary wing unit is provided on each of left and right sides of the body.

29. The flight vehicle according to claim 28, wherein the control unit commonly performs the change control of the auxiliary wing units provided on the left and right sides of the body.

30. The flight vehicle according to claim 28, wherein the auxiliary wing units are provided on more central sides than the rotor blade units.

31. The flight vehicle according to claim 28, wherein the auxiliary wing units are provided more outside than the rotor blade units.

32. The flight vehicle according to claim 28, wherein
the auxiliary wing units have through-holes, and
at least portions of the rotor blade units are provided in the through-holes.

33. The flight vehicle according to claim 1, wherein the rotor blade units are provided in four directions of front, rear, left, and right directions with respect to the body.

34. The flight vehicle according to claim 1, wherein the rotor blade units are provided in four directions of at least a front left direction and a front right direction, and a rear left direction and a rear right direction with respect to the body.

35. The flight vehicle according to claim 1, further comprising a loading portion configured to be loaded with a load.

36. The flight vehicle according to claim 35, wherein the loading portion is provided in the body.

37. The flight vehicle according to claim 35, wherein the loading portion is configured to be loaded with the load from above the loading portion and release the load from below the loading portion.

38. The flight vehicle according to claim 35, wherein the loading portion is configured to be loaded with the load from below the loading portion and release the load from below the loading portion.

39. The flight vehicle according to claim 35, wherein the loading portion is configured to be loaded with the load from a lateral side of the loading portion and release the load from below the loading portion.

40. A method for controlling a flight vehicle that includes:
a body;
a plurality of rotor blade units provided on the body;
an auxiliary wing unit provided on the body; and
a control unit configured to control operation of the rotor blade units and the auxiliary wing unit,
the method comprising causing the control unit to perform change control of a lift of the auxiliary wing unit according to a result of comparison between an acquired thrust-related parameter and a reference parameter.

41. A computer program for controlling a flight vehicle that includes:
a body;
a plurality of rotor blade units provided on the body;
an auxiliary wing unit provided on the body; and
a control unit configured to control operation of the rotor blade units and the auxiliary wing unit,
the computer program causing the control unit to perform change control of a lift of the auxiliary wing unit according to a result of comparison between an acquired thrust-related parameter and a reference parameter.
